# EUROPEAN PATENT APPLICATION

(11) **EP 4 206 160 A1**
(43) Date of publication of application: **05.07.2023**
(21) Application number: 21912739.6
(22) Date of filing: 25.04.2021
(51) Int. Cl.: C04B 35/40, H01F 7/02

(54) **PERMANENT MAGNET FERRITE MATERIAL AND PREPARATION METHOD THEREFOR**

(30) Priority: 29.12.2020 CN 202011587737
(71) Applicant: Hengdian Group DMEGC Magnetics Co., Ltd., Jinhua, Zhejiang 322118 (CN)
(72) Inventor: YANG, Wuguo, Jinhua, Zhejiang 322118 (CN); HE, Zhenyu, Jinhua, Zhejiang 322118 (CN); SHENTU, Jinang, Jinhua, Zhejiang 322118 (CN); FANG, Shengxiang, Jinhua, Zhejiang 322118 (CN); WU, Xiangliang, Jinhua, Zhejiang 322118 (CN); JIN, Zhihong, Jinhua, Zhejiang 322118 (CN)
(74) Representative: Cabinet Beaumont
(86) International application number: PCT/CN2021/089521
(87) International publication number: WO 2022/141975

(57) **Abstract**

Disclosed are a permanent magnet ferrite material and a preparation method therefor. The permanent magnet ferrite material comprises a main phase, and the general formula of the main phase is: A_{1-x-y}CaₓLa_{y}Fe³⁺_{2n-z-a}Fe²⁺ₐCo_{z}O₁₉, wherein A comprises Sr or a combination of Sr and Ba; 0.25≤x≤0.45; 0.40≤y≤0.55; 0.25≤z≤0.40; 0<a≤0.80; 0.6≤z/y≤0.9; and 5.1≤n≤5.6.

## Description

### TECHNICAL FIELD

The present application belongs to the technical field of magnetic materials, and relates to a ferrite material and a preparation method therefor, and for example, relates to a permanent magnet ferrite material and a preparation method therefor.

### BACKGROUND

Permanent magnet materials, also known as hard magnet materials, can maintain constant magnetism once magnetized. In practice, permanent magnet materials work in the second quadrant demagnetization part of the hysteresis loop. Commonly used permanent magnet materials include alnico permanent magnet alloy, ferrite permanent magnet, rare-earth permanent magnet and various composite permanent magnet materials.

Permanent magnet ferrite is one of the basic functional materials of the permanent magnet DC motor, which can meet the requirements of motor used in various environments and has high sensitivity and stability. It can be widely used in all kinds of motors with high power, high speed and high torque, such as high-grade automobile motors (ABS motor, starting motor, etc.), motorcycle starting motors, household appliances, electric tool motors and other fields.

There are two most important parameters that determine the magnetic properties of permanent magnet ferrite, namely residual magnetic flux density (Br) and intrinsic coercivity (Hcj). Permanent magnet ferrite materials can be divided into a sintered permanent magnet ferrite and a bonded permanent magnet ferrite based on the main preparation processes, and the sintered permanent magnet ferrite has obvious advantages in magnetic properties. The original sintered permanent magnet ferrite material is mainly strontium ferrite (SrO·6Fe₂O₃) and barium ferrite (BaO·6Fe₂O₃) with a magnetoplumbite hexagonal structure. Since the beginning of this century, with the application of ion substitution formula technology represented by La-Co substitution, the performance of permanent magnet ferrite has been greatly improved. Researchers at home and abroad have successively developed permanent magnet ferrite materials with remanence of about 4500 Gs and intrinsic coercivity of 5000 Oe.

In recent years, with the trend of miniaturization of electronic components, the requirements for magnetic properties of the permanent magnet ferrite material have been further improved, and the magnetic properties of magnets have higher requirements for temperature sensitivity. The temperature coefficient of Br of the conventional permanent magnet ferrite material is generally about -0.20%, and the temperature coefficient of Hcj is about 0.2-0.5%.

As everyone knows, the permanent magnet ferrite with Ca as the main component (also known as Ca-ferrite), only CaO-Fe₂O₃ and CaO-2Fe₂O₃ are stable, and CaO-6Fe₂O₃ is structurally unstable which is similar to the typical hexagonal magnetoplumbite M-type ferrite. Through La-Co substitution, the M-type Sr-ferrite formed by Ca-La-Co co-substitution can be structurally stable, which become one of the most important fields of studying and developing high-performance permanent magnet ferrites in recent years. By Ca-La-Co ion co-substitution, and by the control of the addition amount of other trace elements, better magnetic properties are obtained.

For example, CN109155175A obtains a high remanence permanent magnet ferrite material with Br of about 4700 Gs by controlling the Fe²⁺ ion content in the Ca-series permanent magnet ferrite within 0. 1-5.4wt%. However, the intrinsic coercivity of this material is low, and less than or equal to 3000 Oe. In addition, CN110114844A and CN110323027A can obtain a permanent magnet ferrite material with an ultra-high Hcj and better temperature stability by optimizing the content of trace B added in Ca-series magnet permanent ferrite, and at the same time, the dependence of the material to the sintering temperature is optimized. Furthermore, CN111533550A obtains a high-performance permanent magnet ferrite material with an ultra-high Hcj and good demagnetization curve squareness factor by optimizing the Ca-La-Co ion substitution amount and controlling the proportion of crystalline grains with a stacking defect in the ferrite grains.

However, the above optimization solutions are based on obtaining high Br or high Hcj materials individually, which cannot give consideration to both, and at the same time, the temperature stability of materials is not paid enough attention.

### SUMMARY

An object of the present application is to provide a permanent magnet ferrite material and a preparation method therefor. The permanent magnet ferrite material provided in the present application can obtain high remanence performance and high intrinsic coercivity at the same time.

To achieve the above object, the present application adopts the technical solutions below.

In a first aspect, the present application provides a permanent magnet ferrite material. The permanent magnet ferrite material comprises a main phase, and a general formula of the main phase is A_{1-x-y}CaₓLa_{y}Fe³⁺_{2n-z-a}Fe²⁺ₐCo_{z}O₁₉;
wherein A comprises Sr or a combination of Sr and Ba; 0.25≤x≤0.45; 0.40≤y≤0.55; 0.25≤z≤0.40; 0<a≤0.80; 0.6≤z/y≤0.9; and 5.1≤n≤5.6.

In the permanent magnet ferrite material provided in the present application, x, y, z and n represent the adding proportion of each major metal element, x can be 0.25, 0.3, 0.35, 0.4 or 0.45, etc.; y can be 0.4, 0.45, 0.5 or 0.55, etc.; z can be 0.25, 0.3, 0.35 or 0.4, etc.; a can be 0.1, 0.2, 0.3, 0.4, 0.5, 0.6, 0.7 or 0.80, etc.; n can be 5.1, 5.2, 5.3, 5.4, 5.5 or 5.6, etc.

By optimizing and controlling the Fe²⁺ ion content in the main phase powder of the pre-sintered material and the final magnet, the permanent magnet ferrite material provided in the present application can simultaneously obtain a remanence Br of about 4700 Gs and an intrinsic coercivity Hcj of more than 5500 Oe on the basis of the ferrite formula that Sr is substituted with Ca-La-Co combination; the temperature coefficient of the intrinsic coercivity Hcj is close to 0, which is basically controlled at less than or equal to 0.05%.

The permanent magnet ferrite provided in the present application, in addition to the main phase, further comprises a trace secondary adding substance and/or an additive.

The permanent magnet ferrite material provided in the present application, which is based on the above main phase powder, is obtained by adding a trace additive, wet secondary ball milling, magnetic field molding and then high temperature sintering.

The following is an optional technical solution for the present application, but not as a restriction on the technical solutions provided in the present application. Through the following optional technical solution, the technical purposes and beneficial effects of the present application can be better achieved and realized.

As an optional technical solution for the present application, the permanent magnet ferrite material is a hexagonal magnetoplumbite M-type ferrite.

Optionally, A is Sr.

Optionally, 0.28≤x≤0.38.

Optionally, 0.42≤y≤0.52.

Optionally, 0.28≤z≤0.35.

As an optional technical solution for the present application, 0.35≤a≤0.75.

Optionally, in the main phase of the permanent magnet ferrite material, a mass percentage content of Fe²⁺ is 0-5.0wt% but excluding 0, such as 1.0wt%, 2.0wt%, 3.0wt%, 4.0wt% or 5.0wt%, optionally 2.0-4.4wt%.

In a second aspect, the present application provides a preparation method for the permanent magnet ferrite material according to the first aspect, and the preparation method comprises the following steps:
(1) mixing and crushing metal element sources required to form the main phase to obtain a first mixture;
(2) subjecting the first mixture in step (1) to pre-sintering under a blast condition, and crushing the obtained pre-sintered material to obtain a main phase powder;
(3) mixing and crushing the main phase powder in step (2) and a secondary adding substance and an additive to obtain a second mixture, and subjecting the second mixture to magnetic field molding to obtain a molded body; and
(4) subjecting the molded body in step (3) to a primary heat treatment, and then performing a secondary heat treatment under a blast condition to obtain the permanent magnet ferrite material.

The preparation method provided in the present application does not include re-sintering.

The preparation method provided in the present application can realize the control of Fe²⁺ ion content through process control, ensuring that the product obtains high remanence performance and high intrinsic coercivity at the same time.

In the method provided in the present application, the metal element sources required to form the main phase are a Ca source, a La source, a Fe source, a Co source and an A element source. The above element sources can be an oxide or a carbonate salt of the corresponding element.

In the method provided in the present application, the primary heat treatment in step (4) is used to remove moisture and the organic additive in the molded body, and the secondary heat treatment is used to sinter the molded body into a permanent magnet ferrite material.

As an optional technical solution for the present application, an average particle size of the metal element source in step (1) is less than or equal to 5 µm, such as 5 µm, 4 µm, 3 µm or 2 µm.

Optionally, the mixing and crushing in step (1) is performed in a manner of wet ball milling.

Optionally, an average particle size of the first mixture in step (1) is less than or equal to 0.8 µm, such as 0.8 µm, 0.7 µm, 0.6 µm or 0.5 µm. In the present application, if the particle size of the first mixture is too large, it is easy to cause insufficient pre-sintering during the pre-sintering process, and the content of M-phase ferrite is too low.

As an optional technical solution for the present application, a temperature of the pre-sintering in step (2) is 1220-1280°C, such as 1220°C, 1230°C, 1240°C, 1250°C, 1260°C, 1270°C or 1280°C, optionally 1230-1260°C.

Optionally, a time of the pre-sintering in step (2) is 0.5-3 h, such as 0.5 h, 1 h, 2 h or 3 h, optionally 1-2 h.

In the pre-sintering process of step (2), the Fe²⁺ ion content in the main phase powder of the pre-sintered material is controlled by adjusting the blast volume and the maximum pre-sintering temperature and heat preservation period during the pre-sintering process. The applicants have found that the Fe²⁺ ion content in the main phase powder of the pre-sintered material have a significant effect on the final magnet performance. If the blast volume is too small during the pre-sintering process and the heat preservation period is too short, the oxygen content in the pre-sintering process will be low, so the Fe²⁺ ion content in the main phase powder of the pre-sintered material will be too high, and if more than 5.0wt%, it will cause the magnetic performance Br of the final magnet to be low. If the blast volume is too large during the pre-sintering process, and the heat preservation period is too long, the oxygen content in the pre-sintering process will be very sufficient, so the Fe²⁺ ion content in the main phase powder of the pre-sintered material will be very low, or even equal to 0, which will cause the magnetic performance Hcj of the final magnet to be low.

Optionally, the crushing in step (2) is a dry crushing.

As an optional technical solution in the present application, the secondary adding substance in step (3) comprises any one or a combination of at least two of SiO₂, CaCO₃, Al₂O₃, Cr₂O₃, ZnO, SrCO₃ or H₃BO₃.

Optionally, an average particle size of the secondary adding substance in step (3) is less than or equal to 5 µm, such as 5 µm, 4 µm, 3 µm or 2 µm.

Optionally, in step (3), based on the total mass of the main phase powder, the secondary adding substance and the additive being 100%, a mass fraction of the secondary adding substance is: 0.05-2.0wt% of SiO₂, such as 0.05wt%, 0.5wt%, 1.0wt% or 2.0wt%; 0.4-2.0wt% of CaCO₃, such as 0.4wt%, 1wt%, 1.5wt% or 2.0wt%; 0-1.5wt% of Cr₂O₃, such as 0, 1wt% or 1.5wt%; 0-0.6wt% of ZnO, such as 0, 0.2wt%, 0.4wt% or 0.6wt%; 0-2.0wt% of Al₂O₃, such as 0, 1.0wt%, or 2.0wt%; 0-0.8wt% of H₃BO₃, such as 0, 0.2wt%, 0.4wt%, 0.6wt% or 0.8wt%; 0.1-1.0wt% of SrCO₃, such as 0.1wt%, 0.2wt%, 0.5wt%, 0.7wt%, or 1.0wt%.

Optionally, the additive in step (3) is a dispersant.

Optionally, the dispersant comprises any one or a combination of at least two of calcium gluconate, polyvinyl alcohol or sorbitol.

Optionally, based on the total mass of the main phase powder, the secondary adding substance and the additive being 100%, a mass fraction of the additive is 0.2-1.2wt%, such as 0.2wt%, 0.4wt%, 0.6wt%, 0.8wt%, 1wt% or 1.2wt%. If the adding amount of the additive is too small, the dispersed slurry particles cannot be obtained, and the effect of improving orientation during molding cannot be obtained. If the amount of additives added is too large, it is easy to cause insufficient discharge of organic in the subsequent sintering process, resulting in a decrease in the density of the sintered body and cracking of the magnet.

Optionally, the mixing and crushing in step (3) is wet ball milling.

Optionally, an average particle size of the second mixture in step (3) is 0.5-0.65 µm, such as 0.5 µm, 0.55 µm, 0.6 µm or 0.65 µm. If the average particle size of the second mixture is too large, it is easy to cause the grain size in the sintered body to be too large after sintering, which will affect the coercivity of the sintered body. If the average particle size of the second mixture is too small, it will cause the blank to crack in the subsequent molding process and the yield will decrease.

As an optional technical solution in the present application, step (3) further comprises adjusting a solid content of the second mixture to 65-80wt%, such as 65wt%, 70wt%, 75wt% or 80wt%. Optionally, a magnetic field intensity of the magnetic field molding in step (3) is more than or equal to 13000 Gs, such as 13000 Gs, 14000 Gs or 15000 Gs. In the present application, if the magnetic field molding is too low, the orientation of the magnetic particles in the molded body will be too low, thereby affecting the remanence of the final magnet.

As an optional technical solution in the present application, a temperature of the primary heat treatment in step (4) is 200-400°C, such as 200°C, 250°C, 300°C, 350°C or 400°C.

Optionally, a time of the primary heat treatment in step (4) is 0.5-2 h, such as 0.5 h, 1 h, 1.5 h or 2 h.

Optionally, a temperature of the secondary heat treatment in step (4) is 1180-1230°C, such as 1180°C, 1190°C, 1200°C, 1210°C, 1220°C or 1230°C, optionally 1190-1220°C.

Optionally, a time of the secondary heat treatment in step (4) is 0.1-3 h, such as 0.1 h, 0.5 h, 1 h, 2 h or 3 h, optionally 0.5-2 h.

In the above sintering process, the Fe²⁺ ion content in the magnet is controlled by adjusting the blast volume and heat preservation period during the sintering process. The applicants have found that the Fe²⁺ ion content had a significant effect on the performance of the final magnet. If the blast volume in the sintering process is too small, and the heat preservation period is too short, it will cause the oxygen content in the sintering process to be low, so that the Fe²⁺ ion content in the final magnet will be too high, and the excessive Fe²⁺ ion content will lead to Br to be low.

As a further optional technical solution for the preparation method in the present application, the method comprises the following steps:
(1) subjecting metal element sources required to form the main phase to wet ball milling to obtain a first mixture, wherein an average particle size of the first mixture is less than or equal to 0.8 µm;
(2) subjecting the first mixture in step (1) to pre-sintering at a temperature of 1230-1260°C for 1-2 h under a blast condition, and subjecting the obtained pre-sintered material to dry crushing to obtain a main phase powder;
(3) subjecting the main phase powder in step (2), a secondary adding substance and an additive to wet ball milling to obtain a second mixture with an average particle size of 0.5-0.65 µm, adjusting a solid content of the second mixture to 65-80wt%, and subjecting the second mixture to magnetic field molding to obtain a molded body; based on the total mass of the main phase powder, the secondary adding substance and the additive being 100%, a mass fraction of the additive is 0.2-1.2wt%; a magnetic field intensity of the magnetic field molding is more than or equal to 13000 Gs; and
(4) performing the molded body in step (3) to a primary heat treatment at a temperature of 200-400°C for 0.5-2 h, and then performing a secondary heat treatment at a temperature of 1190-1220°C for 0.5-2 h under a blast condition to obtain the permanent magnet ferrite material.

Compared with the existing art, the present application has the beneficial effects described below.
(1) The permanent magnet ferrite material provided in the present application is mainly based on hexagonal magnetoplumbite M-type Sr-ferrite, and by Ca-La-Co ion co-substitution and controlling the Fe²⁺ ion content in the main phase powder of the pre-sintered material and the final product in the process, the better magnetic properties are obtained.
(2) The preparation method provided in the present application can realize the control of Fe²⁺ ion content through process control, ensuring that the product obtains high remanence performance and high intrinsic coercivity at the same time.

### DETAILED DESCRIPTION

In order to better illustrate the present application and facilitate the understanding of the technical solution in the present application, the present application is further described in detail below. However, the following embodiments are only simple examples of the present application and do not represent or limit the protection scope of the present application, and the protection scope of the present application is defined by the claims.

The following are typical but not restrictive examples of the present application.

### Example 1

In this example, a permanent magnet ferrite material is prepared by the following method:
(1) according to the main phase composition ratio chemical formula of Sr_{1-x-y}CaₓLa_{y}Fe_{2n-z}Co_{z}O₁₉ and the values of x, y, z and n in Table 1, the required metal element sources (ferric oxide red: a purity content of Fe₂O₃ is more than or equal to 99.2wt%, a content of Cl⁻ ion is less than or equal to 0.1wt%, and an original average particle size of particles is 1.6 µm; strontium carbonate: a purity of SrCO₃ is more than or equal to 98.0wt%, and in the main impurities, a content of BaCO₃ is less than or equal to 1.0wt% and a content of CaCO₃ is less than or equal to 0.6wt%, and an original average particle size of the particles is 2.1 µm; calcium carbonate: a purity of CaCO₃ is more than or equal to 99.0wt%, and an original average particle size of the particles is 3.2 µm; lanthanum oxide: a purity of La₂O₃ is more than or equal to 99.0wt%, and an original average particle size of the particles is 4.5 µm; cobalt trioxide: a purity of Co₂O₃ is more than or equal to 99.0wt%, and an original average particle size of the particles is 2.5 µm.) were weighed and mixed on the basis of the above chemical formula, and subjected to mixing ball milling in a wet ball mill for 5 h, an average particle size was 0.8 µm after the mixing, and then the mixture was dried in an oven, then subjected to pelletizing, that is, a first mixture was obtained;
(2) the first mixture in step (1) was subjected to pre-sintering in air at 1240°C under a blast condition (3/4 of the blast valve was opened) and held at the temperature for 1 hour, and a granular pre-sintered material was obtained; the obtained pre-sintered material was subjected to dry coarse crushing, and a main phase powder was obtained; a content of Fe²⁺ ion in the main phase powder of the pre-sintered material was tested, and the result is shown in Table 1;
(3) 450 g of the main phase powder in step (2) was weighed, 0.5wt% of SiO₂, 0.75wt% of CaCO₃ and 0.4wt% of Cr₂O₃ were added, and then 0.6wt% of calcium gluconate as a dispersant was added, and then 680 mL of deionized water as a ball milling medium was added, the mixture was subjected to wet crushing for 24 hours in an improved high-efficiency ball mill, and a second mixture, the crushed slurry particles with an average particle size of 0.64 µm, was obtained;
(4) a water content of the obtained second mixture was adjusted after wet crushing, a solid content of the slurry was adjusted to 70%, and then subjected to molding, and a molding magnetic field of 14000 Oe was applied in the pressing direction while pressing; the obtained molded body was a cylinder with a diameter of 43.2 mm and a height of 13 mm, and the molding pressure was 10 MPa; and
(5) the molded body was subjected to heat treatment at a temperature of 300°C for 1 h, the organic dispersant was completely removed, and then sintering was performed in the air under a blast condition (3/4 of the blast valve was open), a heating rate was 150°C/hour, and heat preservation was performed at 1220°C for 1.5 hours, the permanent magnet ferrite material was obtained. The Fe²⁺ ion content in the permanent magnet ferrite material was detected as shown in Table 1. Then, the upper and lower surfaces of the permanent magnet ferrite material were ground, its residual magnetic induction intensity (Br), coercivity (Hcb), intrinsic coercivity (Hcj) and maximum magnetic energy product (BH)m at room temperature (20°C), low temperature (-20°C) and high temperature (80°C) were measured, respectively, and the temperature coefficients of Br and Hcj were calculated as shown in Table 2.

### Examples 2-5

A preparation method of the permanent magnet ferrite material in Examples 2-5 refers to Example 1. The difference was that the values of x, y, z and n in step (1) were different from Example 1, as detailed in Table 1. The test method of the products in Examples 2-5 was the same as Example 1, and the results are shown in Table 2.

**Table 1**

| Example | x | y | z | z/y | n | Fe²⁺content in the main phase | Fe²⁺ content in the magnet |
|---|---|---|---|---|---|---|---|
| 1 | 0.28 | 0.40 | 0.30 | 0.75 | 5.1 | 3.5 | 0.8 |
| 2 | 0.35 | 0.45 | 0.28 | 0.62 | 5.5 | 4.4 | 1.2 |
| 3 | 0.40 | 0.55 | 0.35 | 0.64 | 5.4 | 4.1 | 0.6 |
| 4 | 0.45 | 0.35 | 0.25 | 0.71 | 5.2 | 3.9 | 0.5 |
| 5 | 0.25 | 0.47 | 0.40 | 0.85 | 5.6 | 2.3 | 0.1 |

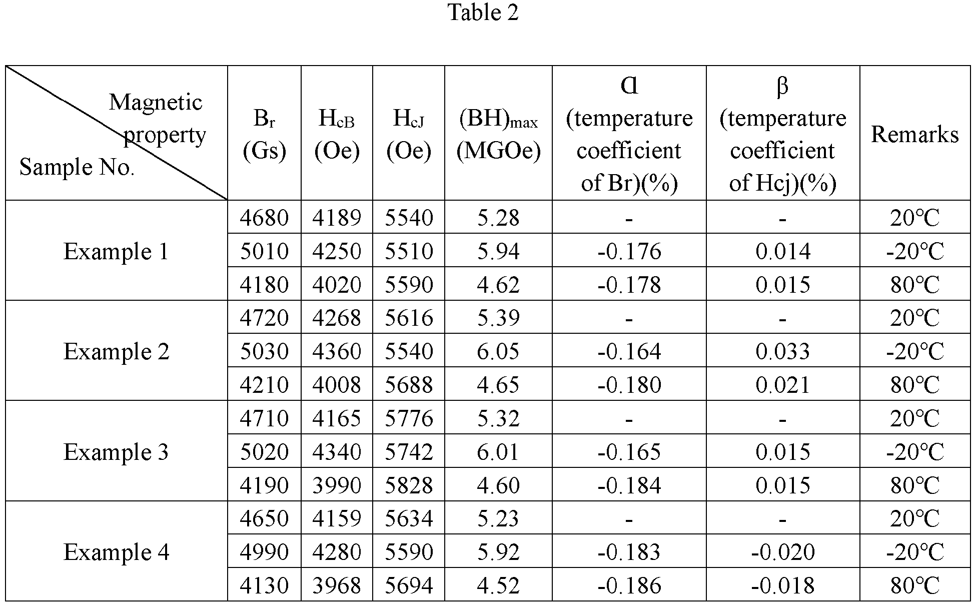

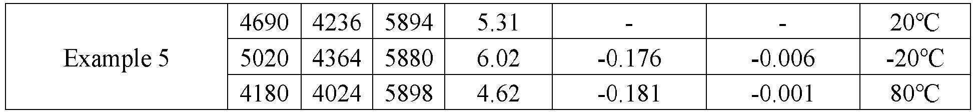

From the above test results, after optimizing the formula and strict process conditions to control the Fe²⁺ ion content in the main phase powder of the pre-sintered material and the final magnet, a remanence (Br) of about 4700 Gs and an intrinsic coercivity (Hcj) of moe than or equal to 5500 Oe can be obtained, and the absolute value of the temperature coefficient of Hcj is less than 0.05, so as to obtain good anti-demagnetization temperature stability.

### Examples 6-7

A preparation method of the permanent magnet ferrite material in Examples 6-7 refers to Example 1. The difference was that in step (1), a portion of Sr in the main component was replaced with Ba and the values of x, y, z and n were different from Example 1, as detailed in Table 3. The test method of the products in Examples 6-7 was the same as Example 1, and the results are shown in Table 4.

**Table 3**

| Example | x | y | z | z/y | n | Fe²⁺ content in the main phase | Fe²⁺ content in the magnet | Ba/Ba+Sr |
|---|---|---|---|---|---|---|---|---|
| 6 | 0.35 | 0.45 | 0.35 | 0.78 | 5.3 | 3.2 | 0.8 | 0.3 |
| 7 | 0.30 | 0.35 | 0.30 | 0.86 | 5.4 | 4.2 | 1.5 | 0.5 |

In Table 3, the "Ba/Ba+Sr" represents a molar proportion of Ba in the A-position adding substance.

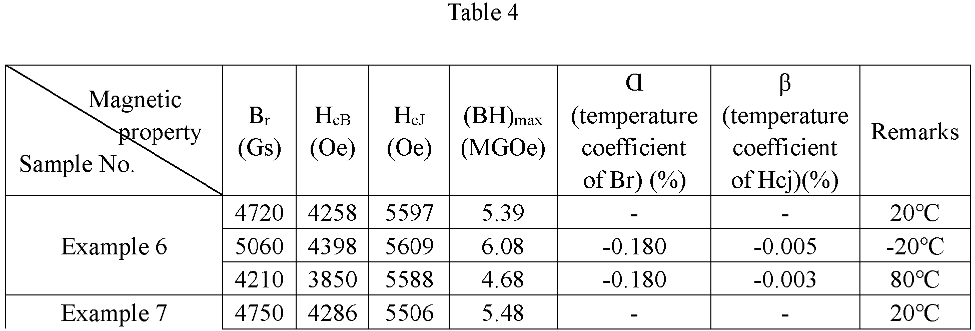

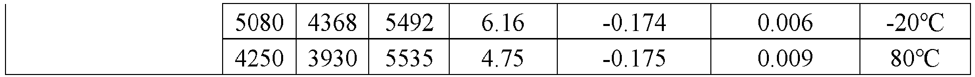

The above test results show that when Ba is used to replace Sr partially, it can promote the remanence of the samples to a certain extent, and at the same time reduces the intrinsic coercivity slightly, and high magnetic properties can be obtained, and Hcj is basically unchanged in high and low temperature conditions.

### Example 8

In this example, a permanent magnet ferrite material is prepared by the following method:
(1) according to the main phase composition ratio chemical formula of Sr_{1-x-y}CaₓLa_{y}Fe_{2n-z}Co_{z}O₁₉ and the values of x, y, z and n in Table 5, the required metal element sources (ferric oxide red: a purity content of Fe₂O₃ is more than or equal to 99.2wt%, a content of Cl⁻ ion is less than or equal to 0.1wt%, and an original average particle size of particles is 1.6 µm; strontium carbonate: a purity of SrCO₃ is more than or equal to 98.0wt%, and in the main impurities, a content of BaCO₃ is less than or equal to 1.0wt% and a content of CaCO₃ is less than or equal to 0.6wt%, and an original average particle size of the particles is 2.1 µm; calcium carbonate: a purity of CaCO₃ is more than or equal to 99.0wt%, and an original average particle size of the particles is 3.2 µm; lanthanum oxide: a purity of La₂O₃ is more than or equal to 99.0wt%, and an original average particle size of the particles is 4.5 µm; cobalt trioxide: a purity of Co₂O₃ is more than or equal to 99.0wt%, and an original average particle size of the particles is 2.5 µm.) were weighed and mixed on the basis of the above chemical formula, and subjected to mixing ball milling in a wet ball mill for 5 h, an average particle size was 0.8 µm after the mixing, and then the mixture was dried in an oven, then subjected to pelletizing, that is, a first mixture was obtained;
(2) the first mixture in step (1) was subjected to pre-sintering in air at 1230°C under a blast condition (3/4 of the blast valve was opened) and held at the temperature for 1.5 hours, and a granular pre-sintered material was obtained; the obtained pre-sintered material was subjected to dry coarse crushing, and a main phase powder was obtained; a content of Fe²⁺ ion in the main phase powder of the pre-sintered material was tested, and the result is shown in Table 5;
(3) 450 g of the main phase powder in step (2) was weighed, 0.05wt% of SiO₂, 0.4wt% of CaCO₃, 1.0wt% of Cr₂O₃ and 0.8wt% of H₃BO₃ were added, and then 0.2wt% of calcium gluconate as a dispersant was added, and then 680 mL of deionized water as a ball milling medium was added, the mixture was subjected to wet crushing for 24 hours in an improved high-efficiency ball mill, and a second mixture, the crushed slurry particles with an average particle size of 0.64 µm, was obtained;
(4) a water content of the obtained second mixture was adjusted after wet crushing, a solid content of the slurry was adjusted to 65%, and then subjected to molding, and a molding magnetic field of 13000 Oe was applied in the pressing direction while pressing; the obtained molded body was a cylinder with a diameter of 43.2 mm and a height of 13 mm, and the molding pressure was 10 MPa; and
(5) the molded body was subjected to heat treatment at a temperature of200°C for 2 h, the organic dispersant was completely removed, and then, sintering was performed in the air under a blast condition (3/4 of the blast valve was open), a heating rate was 150°C/hour, and heat preservation was performed at 1190°C for 2 hours, the permanent magnet ferrite material was obtained. The Fe²⁺ ion content in the permanent magnet ferrite material was detected as shown in Table 5. Then, the upper and lower surfaces of the permanent magnet ferrite material were ground, its residual magnetic induction intensity (Br), coercivity (Hcb), intrinsic coercivity (Hcj), and maximum magnetic energy product (BH)m at room temperature (20°C), low temperature (-20°C) and high temperature (80°C) were measured, respectively, and the temperature coefficients of Br and Hcj were calculated as shown in Table 6.

### Example 9

In this example, a permanent magnet ferrite material is prepared by the following method:
(1) according to the main phase composition ratio chemical formula of Sr_{1-x-y}CaₓLa_{y}Fe_{2n-z}Co_{z}O₁₉, and the values of x, y, z and n in Table 5, the required metal element sources (ferric oxide red: a Fe₂O₃ purity content is more than or equal to 99.2wt%, a content of Cl⁻ ion is less than or equal to 0.1wt%, and an original average particle size of particles is 1.6 µm; strontium carbonate: a purity of SrCO₃ is more than or equal to 98.0wt%, and in the main impurities, a BaCO₃ content is less than or equal to 1.0wt% and a CaCO₃ content is less than or equal to 0.6wt%, and an original average particle size of the particles is 2.1 µm; calcium carbonate: a purity of CaCO₃ is more than or equal to 99.0wt%, and an original average particle size of the particles is 3.2 µm; lanthanum oxide: a purity of La₂O₃ is more than or equal to 99.0wt%, and an original average particle size of the particles is 4.5 µm; cobalt trioxide: a purity of Co₂O₃ is more than or equal to 99.0wt%, and an original average particle size of the particles is 2.5 µm.) were weighed and mixed on the basis of the above chemical formula, and subjected to mixing ball milling in a wet ball mill for 5 h, an average particle size was 0.8 µm after the mixing, and then the mixture was dried in an oven, then subjected to pelletizing, that is, a first mixture was obtained;
(2) the first mixture in step (1) was subjected to pre-sintering in air at 1260°C under a blast condition (3/4 of the blast valve was opened) and held at the temperature for 2 hours, and a granular pre-sintered material was obtained; the obtained pre-sintered material was subjected to dry coarse crushing, and a main phase powder was obtained; a content of Fe²⁺ ion in the main phase powder of the pre-sintered material was tested, and the result is shown in Table 5;
(3) 450 g of the main phase powder in step (2) was weighed, 2.0wt% of SiO₂, 2.0wt% of CaCO₃, 1.5wt% of Cr₂O₃ and 2.0wt% of Al₂O₃ were added, and then 1.2wt% of polyvinyl alcohol as a dispersant was added, and then 680 mL of deionized water as a ball milling medium was added, the mixture was subjected to wet crushing for 24 hours in an improved high-efficiency ball mill, and a second mixture, the crushed slurry particles with an average particle size of 0.6 µm, was obtained;
(4) a water content of the obtained second mixture was adjusted after wet crushing, a solid content of the slurry was adjusted to 80%, and then subjected to molding, and a molding magnetic field of 15000 Oe was applied in the pressing direction while pressing; the obtained molded body was a cylinder with a diameter of 43.2 mm and a height of 13 mm, and the molding pressure was 10 MPa;
(5) the molded body was subjected to heat treatment at a temperature of 400°C for 0.5 h, the organic dispersant was completely removed, and then sintering was performed in the air under a blast condition (3/4 of the blast valve was open), a heating rate was 150°C/hour, and heat preservation was performed at 1200°C for 0.5 hour, the permanent magnet ferrite material was obtained. The Fe²⁺ ion content in the permanent magnet ferrite material was detected as shown in Table 5. Then, the upper and lower surfaces of the permanent magnet ferrite material were ground, its residual magnetic induction intensity (Br), coercivity (Hcb), intrinsic coercivity (Hcj) and maximum magnetic energy product (BH)m at room temperature (20°C), low temperature (-20°C) and high temperature (80°C) were measured, respectively, and the temperature coefficients of Br and Hcj were calculated as shown in Table 6.

**Table 5**

| | | | | | | | |
|---|---|---|---|---|---|---|---|
| Example | x | y | z | z/y | n | Fe²⁺ content in the main phase | Fe²⁺ content in the magnet |
| 8 | 0.28 | 0.40 | 0.30 | 0.75 | 5.1 | 3.5 | 0.2 |
| 9 | 0.28 | 0.40 | 0.30 | 0.75 | 5.1 | 4.6 | 0.7 |

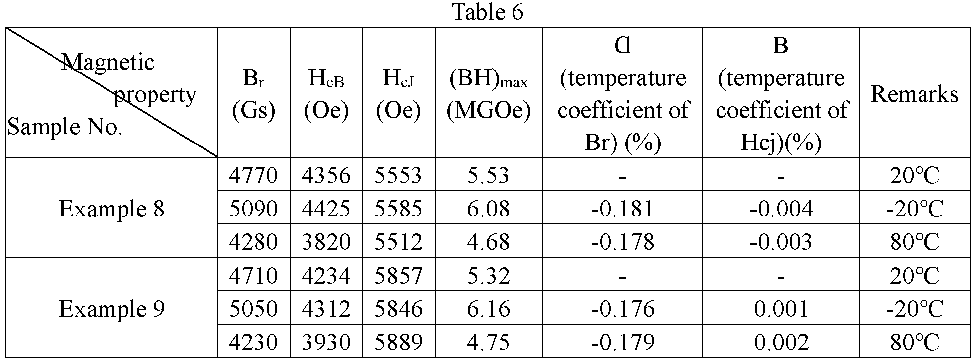

### Comparative Example 1

The difference between the preparation methods of this comparative example and Example 1 was that the values of x, y, z and n in step (1) were different from Example 1 (see Table 7), and the pre-sintering process had too little blast volume (a half of blast valve was open), resulting in a low content of Fe²⁺ ion in the main phase powder of the pre-sintered material.

### Comparative Example 2

The difference between the preparation methods of this comparative example and Example 1 was that the values of x, y, z and n in step (1) were different from Example 1 (see Table 7).

### Comparative Example 3

The difference between the preparation methods of this comparative example and Example 1 was that the values of x, y, z and n in step (1) were different from Example 1 (see Table 7), and the pre-sintering process had excessive blast volume (the whole blast valve was open), resulting in a high content of Fe²⁺ ion in the main phase powder of the pre-sintered material.

The test method of products in Comparative Examples 1-3 is the same as Example 1, the results of which are shown in Table 8.

**Table 7**

| | x | y | z | z/y | n | Fe²⁺ content in the main phase | Fe²⁺ content in the magnet |
|---|---|---|---|---|---|---|---|
| Comparative Example 1 | 0.20 | 0.3 | 0.30 | 1.0 | 5.4 | 0.5 | 0.2 |
| Comparative Example 2 | 0.5 | 0.40 | 0.20 | 0.5 | 5.0 | 4.6 | 1.2 |
| Comparative Example 3 | 0.40 | 0.45 | 0.30 | 0.67 | 5.8 | 6.0 | 0.8 |

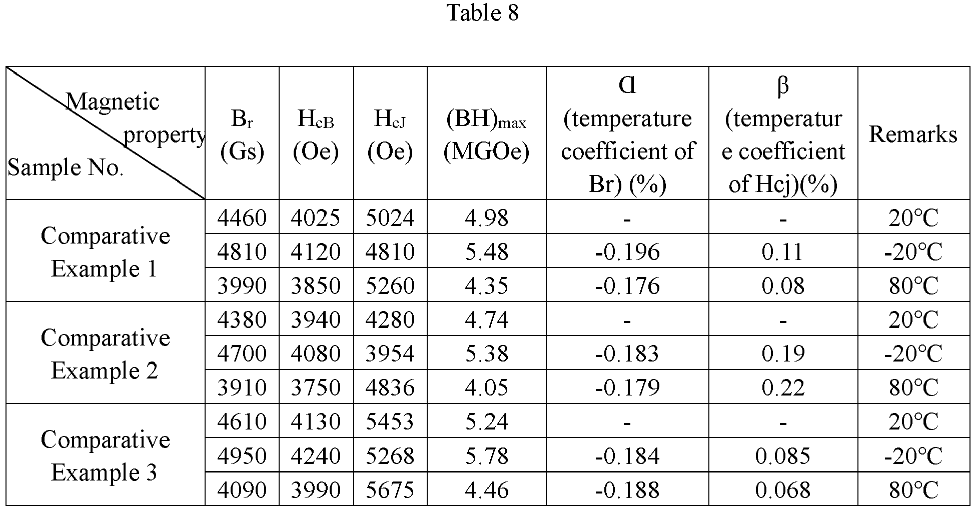

As can be seen from the above test results, the substitution amounts of the main elements in the above comparative examples are not within the control range, and the content of Fe²⁺ in the main phase powder of pre-sintered material and the final sintered magnet powder is not within the control range. Therefore, the performance of the final magnet is low, and the temperature coefficient of Hcj is relatively large, both of which are more than 0.05%, indicating that the anti-demagnetization temperature stability of the magnet is low.

The applicant has stated that although the detailed method of the present application is described through the embodiments described above, the present application is not limited to the detailed method described above, which means that the implementation of the present application does not necessarily depend on the detailed method described above.

## Claims

1. A permanent magnet ferrite material, comprising a main phase, and a general formula of the main phase is: A_{1-x-y}CaₓLa_{y}Fe³⁺_{2n-z-a}Fe²⁺ₐCo_{z}O₁₉;
wherein A comprises Sr or a combination of Sr and Ba; 0.25≤x≤0.45; 0.40≤y≤0.55; 0.25≤z≤0.40; 0<a≤0.80; 0.6≤z/y≤0.9; and 5.1≤n≤5.6;
a temperature coefficient of intrinsic coercivity Hcj of the permanent magnet ferrite material is less than or equal to 0.05%.

2. The permanent magnet ferrite material according to claim 1, wherein the permanent magnet ferrite material is hexagonal magnetoplumbite M-type ferrite.

3. The permanent magnet ferrite material according to claim 1 or 2, wherein 0.35≤a≤0.75.

4. The permanent magnet ferrite material according to any one of claims 1 to 3, wherein a mass percentage content of Fe²⁺ in the main phase of the permanent magnet ferrite material is 0-5.0wt% but excluding 0, optionally 2.0-4.4wt%;
optionally, A is Sr;
optionally, 0.28≤x≤0.38;
optionally, 0.42≤y≤0.52;
optionally, 0.28≤z≤0.35.

5. A preparation method for the permanent magnet ferrite material according to any one of claims 1 to 4, comprising:
(1) mixing and crushing metal element sources required to form the main phase to obtain a first mixture;
(2) subjecting the first mixture in step (1) to pre-sintering under a blast condition, and crushing the obtained pre-sintered material to obtain a main phase powder;
(3) mixing and crushing the main phase powder in step (2) and a secondary adding substance and an additive to obtain a second mixture, and subjecting the second mixture to magnetic field molding to obtain a molded body; and
(4) subjecting the molded body in step (3) to a primary heat treatment, and then performing a secondary heat treatment under a blast condition to obtain the permanent magnet ferrite material.

6. The preparation method according to claim 5, wherein an average particle size of the metal element sources in step (1) is less than or equal to 5 µm;
optionally, the mixing and crushing in step (1) is performed in a manner of wet ball milling;
optionally, an average particle size of the first mixture in step (1) is less than or equal to 0.8 µm.

7. The preparation method according to claim 5 or 6, wherein a temperature of the pre-sintering in step (2) is 1220-1280°C, optionally 1230-1260°C;
optionally, a time of the pre-sintering in step (2) is 0.5-3 h, optionally 1-2 h;
optionally, the crushing in step (2) is dry crushing.

8. The preparation method according to any one of claims 5 to 7, wherein the secondary adding substance in step (3) comprises any one or a combination of at least two of SiO₂, CaCO₃, Al₂O₃, Cr₂O₃, ZnO, SrCO₃ or H₃BO₃;
optionally, an average particle size of the secondary adding substance in step (3) is less than or equal to 5 µm;
optionally, in step (3), based on the total mass of the main phase powder, the secondary adding substance and the additive being 100%, a mass fraction of the secondary adding substance is 0.05-2.0wt% of SiO₂, 0.4-2.0wt% of CaCO₃, 0-1.5wt% of Cr₂O₃, 0-0.6wt% of ZnO, 0-2.0wt% of Al₂O₃, 0-0.8wt% of H₃BO₃, and 0.1-1.0wt% of SrCO₃;
optionally, the additive in step (3) is a dispersant;
optionally, the dispersant comprises any one or a combination of at least two of calcium gluconate, polyvinyl alcohol or sorbitol;
optionally, based on the total mass of the main phase powder, the secondary adding substance and
the additive being 100%, a mass fraction of the additive is 0.2-1.2wt%;
optionally, the mixing and crushing in step (3) is wet ball milling;
optionally, an average particle size of the second mixture in step (3) is 0.5-0.65 µm.

9. The preparation method according to any one of claims 5 to 8, wherein step (3) further comprises adjusting a solid content of the second mixture to 65-80wt%;
optionally, a magnetic field intensity of the magnetic field molding in step (3) is more than or equal to 13000 Gs.

10. The preparation method according to any one of claims 5 to 9, wherein a temperature of the primary heat treatment in step (4) is 200-400°C;
optionally, a time of the primary heat treatment in step (4) is 0.5-2 h;
optionally, a temperature of the secondary heat treatment in step (4) is 1180-1230°C, optionally 1190-1220°C;
optionally, a time of the secondary heat treatment in step (4) is 0.1-3 h, optionally 0.5-2 h.

11. The preparation method according to any one of claims 5 to 10, wherein the preparation method comprises:
(1) subjecting metal element sources required to form the main phase to wet ball milling to obtain a first mixture, wherein an average particle size of the first mixture is less than or equal to 0.8 µm;
(2) subjecting the first mixture in step (1) to pre-sintering at a temperature of 1230-1260°C for 1-2 h under a blast condition, and subjecting the obtained pre-sintered material to dry crushing to obtain a main phase powder;
(3) subjecting the main phase powder in step (2), a secondary adding substance and an additive to wet ball milling to obtain a second mixture with an average particle size of 0.5-0.65 µm, adjusting a solid content of the second mixture to 65-80wt%, and subjecting the second mixture to magnetic field molding to obtain a molded body; based on the total mass of the main phase powder, the secondary adding substance and the additive being 100%, a mass fraction of the additive is 0.2-1.2wt%; a magnetic field intensity of the magnetic field molding is more than or equal to 13000 Gs; and
(4) subjecting the molded body in step (3) to a primary heat treatment at a temperature of 200-400°C for 0.5-2 h, and then performing a secondary heat treatment at a temperature of 1190-1220°C for 0.5-2 h under a blast condition to obtain the permanent magnet ferrite material.
